(19) Europäisches Patentamt / European Patent Office / Office européen des brevets

(11) **EP 4 252 944 A1**

(12) **EUROPEAN PATENT APPLICATION**
published in accordance with Art. 153(4) EPC

(43) Date of publication:
**04.10.2023 Bulletin 2023/40**

(21) Application number: **20963622.4**

(22) Date of filing: **30.11.2020**

(51) International Patent Classification (IPC):
***B23C 5/10*** *(2006.01)*

(52) Cooperative Patent Classification (CPC):
**B23C 5/10**

(86) International application number:
**PCT/JP2020/044552**

(87) International publication number:
**WO 2022/113359 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **OSG Corporation
Aichi 442-0005 (JP)**

(72) Inventors:
• UKEI Shigetoshi
  **Toyokawa-shi, Aichi 441-1231 (JP)**
• ISOBE Masataka
  **Toyokawa-shi, Aichi 441-1231 (JP)**

(74) Representative: **TBK
Bavariaring 4-6
80336 München (DE)**

(54) **END MILL**

(57) An end mill (10) includes a plurality of peripheral cutting edges (20a,20b,20c) having a cutting diameter that is constant over their entire cutting length. The plurality of peripheral cutting edges (20a,20b,20c), which are adjacent to each other, are defined by curved teeth (20a,20b,20c). Each of the curved teeth (20a,20b,20c) is twisted in a twist direction that is changed irreversibly and smoothly from one of rightward and leftward directions to the other of the rightward and leftward directions in the entire cutting length so as to be reversed right and left on its way. Each of the curved teeth (20a,20b,20c) has a curved shape curved in an arcuate or arched manner in a development view of an outer circumferential surface of the end mill (10) around an axis such that a corresponding one of the peripheral cutting edges (20a,20b,20c) is provided on a concave side of the curved shape.

FIG.2

EP 4 252 944 A1

## Description

TECHNICAL FIELD

The present invention relates to an end mill, and particularly, to new techniques effective to ensure anti-vibration performance and to suppress burrs and delamination.

BACKGROUND ART

As an end mill having excellent anti-vibration performance, there is known a variable-lead end mill in which a plurality of peripheral cutting edges having respective helix angles that are different from each other (see Patent Document 1). However, in such a variable-lead end mill, there is a problem that burrs or delamination (hereinafter referred to as burrs or the like) is likely to occur on a side where the peripheral cutting edges are caused to cut a surface of a workpiece with an obtuse angle, due to the helix angles. On the other hand, there is proposed a so-called herringbone-shaped end mill in which two types of peripheral cutting edges are disposed to be adjacent in a tool axial direction, wherein the two types of peripheral cutting edges are opposite in a twist direction (see Patent Document 2). In this herringbone-shaped end mill, it is possible to cause the peripheral cutting edges to cut both of upper and lower side surfaces of a workpiece with acute angles, thereby suppressing occurrence of the burrs or the like.

PRIOR ART DOCUMENT

PATENT DOCUMENT

Patent Document 1: JP S63-89212A
Patent Document 2: JP 2013-22657A

DISCLOSURE OF THE INVENTION

OBJECT TO BE ACHIEVED BY THE INVENTION

However, in such a herringbone-shaped end mill, chips are likely to stay due to complicated shapes of portions in which the two types of peripheral cutting edges, which are opposite in the twist direction, overlap with each other, so that machining condition is likely to be restricted due to clogging of the chips.

The present invention was made in view of the background discussed above. It is therefore an object of the present invention to provide new shapes of peripheral cutting edges, which are effective to assure anti-vibration performance and to suppress burrs or the like.

MEASURES FOR SOLVING THE PROBLEM

For attaining this object, a first invention is, in an end mill comprising a plurality of peripheral cutting edges, characterized in that the plurality of peripheral cutting edges, which are adjacent to each other, are defined by curved teeth each of which is twisted in a twist direction reversed right and left on a way thereof, and each of which has a curved shape curved in an arcuate or arched manner in a development view of an outer circumferential surface of the end mill around an axis such that a corresponding one of the peripheral cutting edges is provided on a concave side of the curved shape.

A second invention is, in the end mill of the first invention, characterized in that the curved shape of each of the curved teeth in the development view is defined by an arc that consists of a part of a perfect circle.

A third invention is, in the end mill of the first or second invention, characterized in that, where a most recessed point of the curved shape of each of the curved teeth in the development view is represented by P1, a bottom-cutting-edge side end of the curved shape in a tool axial direction is represented by P2, and a shank-portion side end of the curved shape in the tool axial direction is represented by P3, a circumferential distance a between the most recessed point P1 and the bottom-cutting-edge side end P2 and a circumferential distance b between the most recessed point P1 and the shank-portion side end P3 are both set in a range not smaller than a tooth length×0.0002 and not larger than the tooth length×0.1300, and the most recessed point P1 is located in a region extending from the bottom-cutting-edge side end P2 in the tool axial direction by a distance corresponding to 5-95% of the tooth length.

A fourth invention is, in the end mill of any one of the first through third inventions, characterized in that, where a most recessed point of the curved shape of each of the curved teeth in the development view is represented by P1, a bottom-cutting-edge side end of the curved shape in a tool axial direction is represented by P2, a shank-portion side end of the curved shape in the tool axial direction is represented by P3, a circumferential distance between the most recessed point P1 and the bottom-cutting-edge side end P2 is represented by a, and a circumferential distance between the most recessed point P1 and the shank-portion side end P3 is represented by b, the circumferential distance a and the circumferential distance b are different from each other in each of the curved teeth, and each two of the curved teeth defining respective two of the peripheral cutting edges that are adjacent to each other are different from each other in terms of the circumferential distance a and the circumferential distance b.

A fifth invention is, in the end mill of any one of the first through third inventions, characterized in that, where a most recessed point of the curved shape of each of the curved teeth in the development view is represented by P1, a bottom-cutting-edge side end of the curved shape in a tool axial direction is represented by P2, a shank-portion side end of the curved shape in the tool axial direction is represented by P3, a circumferential distance between the most recessed point P1 and the bottom-cutting-edge side end P2 is represented by a, and a circumferential distance between the most recessed point P1 and the shank-portion side end P3 is represented by b, the circumferential distance a and the circumferential distance b are different from each other in each of the curved teeth, and each two of the curved teeth defining respective two of the peripheral cutting edges that are adjacent to each other are identical in shape with each other and are same as each other in terms of the circumferential distance a and the circumferential distance b.

A sixth invention is, in the end mill of any one of the first through third inventions, characterized in that, where a most recessed point of the curved shape of each of the curved teeth in the development view is represented by P1, a bottom-cutting-edge side end of the curved shape in a tool axial direction is represented by P2, a shank-portion side end of the curved shape in the tool axial direction is represented by P3, a circumferential distance between the most recessed point P1 and the bottom-cutting-edge side end P2 is represented by a, and a circumferential distance between the most recessed point P1 and the shank-portion side end P3 is represented by b, the circumferential distance a and the circumferential distance b are equal to each other in each of the curved teeth, and each two of the curved teeth defining respective two of the peripheral cutting edges that are adjacent to each other are different from each other in terms of the circumferential distance a and the circumferential distance b.

A seventh invention is, in the end mill of any one of the first through third inventions, characterized in that, where a most recessed point of the curved shape of each of the curved teeth in the development view is represented by P1, a bottom-cutting-edge side end of the curved shape in a tool axial direction is represented by P2, a shank-portion side end of the curved shape in the tool axial direction is represented by P3, a circumferential distance between the most recessed point P1 and the bottom-cutting-edge side end P2 is represented by a, and a circumferential distance between the most recessed point P1 and the shank-portion side end P3 is represented by b, the circumferential distance a and the circumferential distance b are equal to each other in each of the curved teeth, and each two of the curved teeth defining respective two of the peripheral cutting edges that are adjacent to each other are identical in shape with each other and are same as each other in terms of the circumferential distance a and the circumferential distance b.

An eighth invention is, in the end mill of any one of the first through third inventions, characterized in that, where a most recessed point of the curved shape of each of the curved teeth in the development view is represented by P1, a bottom-cutting-edge side end of the curved shape in a tool axial direction is represented by P2, a shank-portion side end of the curved shape in the tool axial direction is represented by P3, a circumferential distance between the most recessed point P1 and the bottom-cutting-edge side end P2 is represented by a, and a circumferential distance between the most recessed point P1 and the shank-portion side end P3 is represented by b, the circumferential distance a and the circumferential distance b are different from each other in an ab-different curved tooth, and are equal to each other in an ab-equal curved tooth, wherein the ab-different curved tooth and the ab-equal curved tooth are included in the curved teeth.

A ninth invention is, in the end mill of any one of the first through eighth inventions, characterized in that the plurality of peripheral cutting edges, which are adjacent to each other, are defined by one kind of teeth selected from among normal teeth, nicked teeth and roughing teeth. It is noted that each of the normal teeth is a smooth and standard tooth which defines neither a nicked portion (grooved portion) nor a roughing portion (corrugated portion) and which has a constant outside diameter.

A tenth invention is, in the end mill of any one of the first through ninth inventions, characterized in that a surface of a tooth portion, which is provided with the plurality of peripheral cutting edges, is covered with a hard coating.

EFFECTS OF THE INVENTION

In the end mill constructed as described above, the plurality of peripheral cutting edges, which are adjacent to each other, are defined by the curved teeth each of which is twisted in a twist direction reversed right and left on the way, and each of which has the curved shape curved in the arcuate or arched manner in the development view of the outer circumferential surface of the end mill around the axis such that the corresponding one of the peripheral cutting edges is provided on the concave side of the curved shape. Thus, a direction of a cutting force applied by each of the peripheral cutting edges is continuously changed by change of twist or helix angle of the each of the peripheral cutting edges, whereby assure anti-vibration performance can be obtained. Further, owing to the curved teeth defining the respective peripheral cutting edges, it is possible to suppress occurrence of burrs or the like on upper and lower surfaces of a workpiece. Moreover, since each of the curved teeth has the smoothly curved shape, retention of chips is suppressed and restriction to a machining condition is relaxed, for example.

In the second invention, the curved shape of each of the curved teeth in the development view is defined by the arc that consists of the part of a perfect circle, so that a curvature of the curved shape is constant throughout an entire tooth length of each of the curved teeth, and accordingly the helix angle of each of the peripheral cutting edges is smoothly changed at a constant rate. Thus, it is possible to appropriately obtain the anti-vibration performance, and to suppress occurrence of the burrs or the like and retention of the chips.

In the third invention, the most recessed point P1 is located in the region extending from the bottom-cutting-edge side end P2 in the tool axial direction by a distance corresponding to 5%-95% of the tooth length, and the circumferential distances a, b are both set in the range not smaller than the tooth length×0.0002 and not larger than the tooth length×0.1300. Thus, the curvature in vicinity of the bottom-cutting-edge side end P2 and in vicinity of the shank-portion side end P3 is relatively small, so that the chips are unlikely to stay on the concave side of the curved shape of each of the curved teeth and accordingly the chips are less tangled. Therefore, it is possible to appropriately obtain the anti-vibration performance owing to the curved teeth, and to suppress occurrence of the burrs or the like and retention of the chips.

In any one of the fourth through eighth inventions, there are defined features relating to the distances a, b in each of the plurality of curved teeth, by way of examples. In any one of the fourth through eighth inventions, it is possible to appropriately obtain the anti-vibration performance, and to suppress occurrence of the burrs or the like and retention of the chips.

In the ninth invention, the plurality of peripheral cutting edges, which are adjacent to each other, are defined by one kind of teeth selected from among the normal teeth, the nicked teeth and the roughing teeth. It is possible to employ an end mill having teeth whose shape is dependent on purpose such as a finishing operation, a semi-finishing operation and a roughing operation, and also a material of the workpiece.

In the tenth invention, the surface of a tooth portion, which is provided with the plurality of peripheral cutting edges, is covered with a hard coating. Thus, excellent cutting durability can be obtained even in the curved teeth each of which is twisted in the direction reversed right and left on the way.

BRIEF DESCRIPTION OF DRAWINGS

FIG. 1 is a perspective view showing an end mill according to an embodiment of the present invention.

FIG.2 is a set of views for explaining shapes of three peripheral cutting edges provided in the end mill of FIG. 1.

FIG. 3 is a set of photographs showing, by way of examples, various forms of curved shapes of the peripheral cutting edges.

FIG. 4 is a set of views showing, by way of examples, other forms of the curved shapes of the peripheral cutting edges.

FIG.5 is a view showing combinations in which peripheral cutting edges of three-flute end mill are defined by eight kinds of teeth A-H of FIG.4.

FIG.6 is a set of views showing, by way of example, a case in which a peripheral cutting edge of an end mill is constituted by a nicked tooth or a roughing tooth, as compared with a case in which the peripheral cutting edge is constituted by a normal tooth.

FIG.7 is a set of views for explaining a direction and a magnitude of a cutting force applied by each of three peripheral cutting edges and also a cutting manner of each of the three peripheral cutting edges, by comparing tools of the present invention and a conventional variable-lead tool.

FIG.8 is a set of views for explaining interference of peripheral cutting edges of conventional variable-lead tools.

FIG.9 is a set of views for explaining misalignment of a conventional herringbone-shaped tool, relative to a work material.

FIG. 10 is a view for explaining three kinds of test samples, which were used when cutting tests were performed.

FIG. 11 is a view for explaining a resultant force of resistance values that is measured in the cutting tests.

FIG. 12 is a view for explaining a positional relationship between a work material and a tool in the cutting tests.

FIG. 13 is a view for explaining an amplitude of the resultant force of resistance values measured in the cutting tests.

FIG. 14 is a view for explaining a machining condition in the cutting tests.

FIG. 15 is a view for explaining values of the amplitude of the resultant force of resistance values measured in cutting operations performed in the machining condition of FIG. 14, and ratios.

FIG. 16 is a view showing the values of the amplitude of FIG. 15 by a graph in a comparative manner.

FIG. 17 is a view for explaining a machining condition when other cutting tests performed, by the test samples shown in FIG. 10, to a different work material.

FIG.18 is a view for explaining values of the amplitude of the resultant force of resistance values measured in machining operations performed in the machining condition of FIG. 17, and ratios.

FIG.19 is a view showing the values of the amplitude of FIG.18 by a graph in a comparative manner.

FIG.20 is a view for explaining five kinds of test samples that are different from one another in terms of distances a, b of curved shape of each peripheral cutting edge.

FIG.21 is a set of photographs showing the curved shapes of the peripheral cutting edges of the five kinds of test samples of FIG.20.

FIG.22 is a view for explaining a machining condition in cutting tests performed by using the test samples of FIG.20.

FIG.23 shows results of the cutting tests of FIG.22 in which entanglement of chips was checked.

FIG.24 is a set of photographs showing the chips generated when cutting operations were performed at feed rate per tooth of 0.18mm/t in the cutting tests of FIG.22, in a comparative manner.

FIG.25 is a view for explaining four kinds of test samples of four-flute end mills that are different from one another in terms of shapes of peripheral cutting edges.

FIG.26 is a set of views for specifically explaining the shapes of the peripheral cutting edges provided in the four kinds of test samples of FIG.25.

FIG.27 is a view for explaining a machining condition in cutting tests performed by using the test samples of FIG.25.

FIG. 28 is a view for explaining a maximum value and an amplitude of a resultant force measured in cutting operations performed in the machining condition of FIG.27, and their ratios.

FIG.29 is a set of views each showing a vibration waveform of the resultant force of resistance values measured in the cutting operations performed in the machining condition of FIG.27, in a comparative manner.

FIG.30 is a view for explaining four kinds of test samples of four-flute end mills that are different from one another in terms of shapes of peripheral cutting edges.

FIG.31 is a set of views for specifically explaining the shapes of the peripheral cutting edges provided in the four kinds of test samples of FIG.30.

FIG.32 is a view for explaining a machining condition in cutting tests performed by using the test samples of FIG.30.

FIG. 33 is a view for explaining a maximum value and an amplitude of a resultant force measured in cutting operations performed in the machining condition of FIG.32, and their ratios.

FIG.34 is a set of views each showing a vibration waveform of the resultant force of resistance values measured in the cutting operations performed in the machining condition of FIG.32, in a comparative manner.

FIG.35 is a view for explaining two kinds of test samples of three-flute end mills that are different from each other in terms of shapes of peripheral cutting edges.

FIG.36 is a set of view for specifically explaining shapes of respective arc teeth of the test sample No.2 of FIG.35.

FIG.37 is a view for explaining a positional relationship between a work material and a tool in the cutting tests that were performed by using the test samples of FIG.35.

FIG.38 is a set of views showing photographs of burrs generated on machined surfaces that were obtained in the cutting tests of FIG. 37.

FIG.39 is a view for explaining three kinds of test samples.

FIG.40 is a view for explaining a machining condition in cutting tests performed by using the test samples of FIG.39.

FIG. 41 is a set of views for explaining results of the cutting tests performed in the machining condition of FIG. 40, by showing a vibration waveform of a resultant force of resistance values, a maximum value and an amplitude of the resultant force, ratios and photographs of burrs.

MODES FOR CARRYING OUT THE INVENTION

The end mill of the present invention may be driven and rotated either in clockwise or counterclockwise direction as seen from side of the shank portion, for performing a cutting operation. Where the end mill is to be driven and rotated in the clockwise direction as seen from side of the shank portion for performing a cutting operation, the curved tooth is formed to have a curved shape so as to be twisted leftward in its shank-portion side portion and so as to be twisted rightward in its bottom-cutting-edge side portion. Where the end mill is to be driven and rotated in the counterclockwise direction as seen from side of the shank portion for performing a cutting operation, the curved tooth is formed to have a curved shape so as to be twisted rightward in its shank-portion side portion and so as to be twisted leftward in its bottom-cutting-edge side portion.

In a development view of an outer circumferential surface of the end mill, the curved tooth having the curved shape is defined by an arc that consists of, for example, a part of a perfect circle in the development view. However, the arc defining the curved shape of the curved tooth may consist of a part of an ellipse. Further, the curved shape of the curved tooth may be defined by a plurality of arcs having respective curvatures that are different from each other, or may be defined by an arc in which a straight line portion is provided in its way. That is, the curved shape of the curved tooth may take any one of various forms, as long as a twist direction is changed irreversibly and smoothly from one of rightward and leftward directions to the other of the rightward and leftward directions such that the curved shape is changed from rightward twist to leftward twist or from the leftward twist to the rightward twist between the shank-portion side end and the bottom-cutting-edge side end. Such a curved tooth can be formed by, for example, a grinding operation using a grinding machine having five axes or the like.

It is preferable that the most recessed point P1 of the curved shape in the development view of the curved tooth is located in a region extending from the bottom-cutting-edge side end P2 in the tool axial direction by a distance corresponding to 5%-95% of the tooth length. However, the most recessed point P1 may be located outside the above-described region as long as the twist direction of the curved tooth is reversed at least in its opposite end portions. A circumferential distance a between the most recessed point P1 and the bottom-cutting-edge side end P2 and another circumferential distance b between the most recessed point P1 and the shank-portion side end P3 are both preferably within a range from 0.0002 times as large as the tooth length to 0.1300 times as large as the tooth length. However, each of the two circumferential distances a, b may be smaller than 0.0002 times as large as the tooth length or larger than 0.1300 times as large as the tooth length. The curvature of the curved tooth in vicinity of the bottom-cutting-edge side end P2 and the curvature of the curved tooth in vicinity of the shank-portion side end P3 are dependent on the above-described two circumferential distances a, b, and are increased as the two circumferential distances a, b are increased, in general. Each of the two circumferential distances a, b is preferably within a range from 0.08mm to 1. 19mm, for example.

Where the peripheral cutting edges are defined by a plurality of kinds of curved teeth that are different in terms of at least one of the two circumferential distances a, b. it is preferable that each adjacent pair of peripheral cutting edges, which are adjacent to each other, are defined by the respective curved teeth that are different in kind. Further, irrespective of whether the plurality of curved teeth are identical in shape to each other, it is preferable that the plurality of curved teeth are equally spaced in a circumferential direction of the end mill. However, the plurality of curved teeth may be unequally spaced in the circumferential direction.

The end mill of the present invention is used advantageously for trimming/cutting operations (outer periphery cutting operations) performed to FRP (fiber reinforced plastics) such as CFRP (carbon fiber reinforced plastics) and CFRTP (carbon fiber reinforced thermoplastics), for example. However, the end mill of the present invention may be used also for cutting operations performed to another work material such as a steel material. As a material forming the end mill, although a cemented carbide or a high-hardness sintered body is preferably used, other hard tool materials such as a high-speed tool steel may be used, too. Moreover, the end mill may be covered with a hard coating, as needed, for increasing a cutting durability. The hard coating may be constituted by, in addition to an intermetallic compound, other coating such as a diamond coating. As the intermetallic compound, a metal of group 4, 5, 6 or 13 of the periodic table, such as carbide, nitride and carbonitride of Al, Ti, V, or Cr, or mutual solid solutions of these. Specifically, TiN, TiAlN, TiCN, TiCrN, AlCrN or the like is preferably used. Such a hard coating of intermetallic compound is preferably formed by PVD method such as arc ion plating method and sputtering method, but can also be formed by other film formation method such as plasma CVD method. Although being widely applied to an end mill having three or four teeth, the present invention can be applied also to an end mill having two teeth or five or more teeth.

There will be described embodiments of the present invention in details with reference to drawings. It is noted that figures of the drawings are simplified or deformed as needed, and each portion is not necessarily precisely depicted in terms of dimension ratio, shape, angle, etc, for easier understanding of the embodiments.

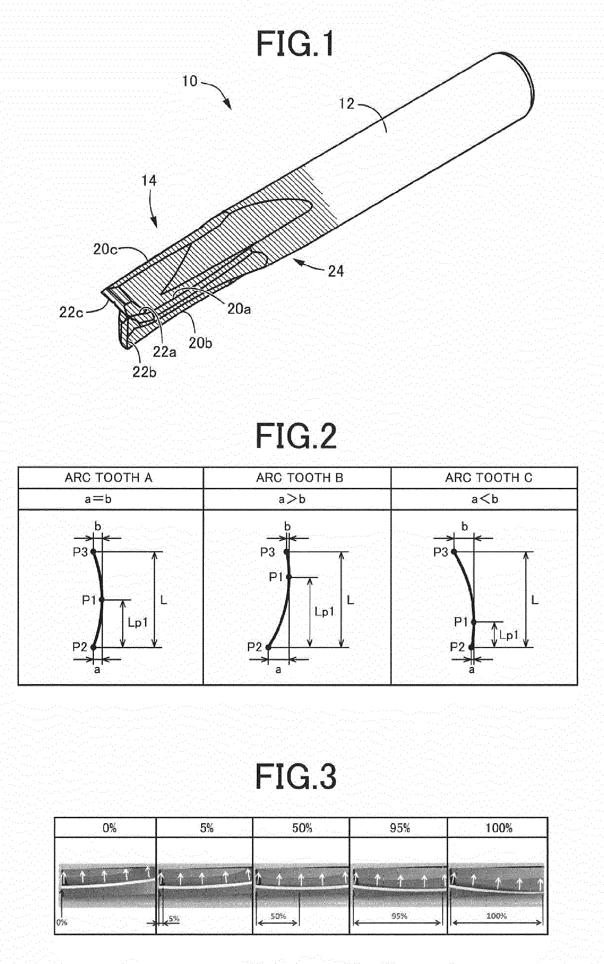

FIG.1 is a perspective view showing an end mill 10 according to an embodiment of the present invention. The end mill 10 includes a shank portion 12 and a tooth portion 14 that are coaxial with each other. The tooth portion 14 is provided with three flutes whereby three peripheral cutting edges 20a, 20b, 20c (hereinafter simply referred to as "peripheral cutting edges 20" unless they are to be distinguished from one another). Bottom cutting edges 22a, 22b, 22c (hereinafter simply referred to as "bottom cutting edges 22" unless they are to be distinguished from one another) are provided to be contiguous to distal ends of the respective three peripheral cutting edges 20a, 20b, 20c. The end mill 10 is to be rotated in clockwise direction as seen from side of the shank portion 12, for performing a cutting operation. This end mill 10 is made of a cemented carbide, and a surface of the tooth portion 14 is covered with a hard coating 24 such as a diamond coating. The hard coating 24 is represented by a hatched area in FIG. 1.

Each of the three peripheral cutting edges 20 are defined by curved teeth each of which is twisted in a twist direction reversed right and left on a way thereof, namely, the twist direction of each of the curved teeth defining the respective three peripheral cutting edges 20 is reversed right and left on the way. Further, each of the curved teeth has a curved shape curved in an arcuate or arched manner in a development view of an outer circumferential surface of the end mill 10 around an axis of the end mill 10 such that a corresponding one of the peripheral cutting edges 20 is provided on a concave side of the curved shape of the each of the curved teeth. The curved shape of each of the curved teeth in the development view is defined by an arc that consists of a part of a perfect circle, as in arc teeth A-C shown in FIG.2, for example. Where the most recessed point (recessed point) of the curved shape, namely, the rearmost point of the curved shape in a cutting rotation direction as one of circumferentially opposite directions is represented by "P1", a bottom-cutting-edge side end in a tool axial direction is represented by "P2", and a shank-portion side end in the tool axial direction is represented by "P3", it is preferable that a circumferential distance (bottom-cutting-edge side circumferential distance) a, which is a distance between the recessed point P1 and the bottom-cutting-edge side end P2 in the circumferential direction, and a circumferential distance (shank-portion side circumferential distance) b, which is a distance between the recessed point P1 and the shank-portion side end P3 in the circumferential direction, are both set in a range not smaller than a tooth length L×0.0002 and not larger than the tooth length L×0.1300, as indicated in expressions (1), (2) given below. A specific value of the circumferential distances a, b is set in a range from about 0.08mm to 1.19mm, for example. Further, a tool axial-direction dimension Lp1, which is a distance from the bottom-cutting-edge side end P2 to the recessed point P1 is preferably set in a range from 5% of the tooth length L to 95% of the tooth length L, as indicated in expression (3) given below. In the present embodiment, each of the arc teeth A-C is twisted rightward in the bottom-cutting-edge side end P2, and is twisted leftward in the shank-portion side end P3. Where the curved shape is defined by an arc, a position of a center of the arc is coincident with the recessed point P1 in the tool axial direction.

$$L \times 0.0002 \le a < L \times 0.1300 \quad \ldots\ldots\ldots(1)$$

$$L \times 0.0002 \le b \le L \times 0.1300 \ldots\ldots\ldots.(2)$$

$$L \times 0.05 \le Lp1 \le L \times 0.95 \quad \ldots\ldots\ldots.(3)$$

In the end mill 10 of the present embodiment, the three peripheral cutting edges 20 are defined by one or two kinds of teeth selected from among the three kinds of arc teeth A-C shown in FIG. 2, or are defined by the respective three kinds of arc teeth A-C. That is, for example, the peripheral cutting edge 20a is defined by the arc tooth A, the peripheral cutting edge 20b is defined by the arc tooth B, and the peripheral cutting edge 20c is defined by the arc tooth C.

FIG. 3 is a set of photographs show the shape of the tooth in cases in which a ratio of the tool axial-direction dimension Lp1 to the tooth length L is 0%, 5%, 50%, 95% and 100%. Where the dimension Lp1 to the tooth length L is 0%, the tooth is a straight tooth parallel to the axis in the bottom-cutting-edge side end P2, so that it is not possible to appropriately obtain an effect to suppress burrs or the like on the side of the bottom cutting edges 22. Where the dimension Lp1 to the tooth length L is 100%, the tooth is a straight tooth parallel to the axis in the shank-portion side end P3, so that it is not possible to appropriately obtain an effect to suppress burrs or the like on the side of the shank portion 12.

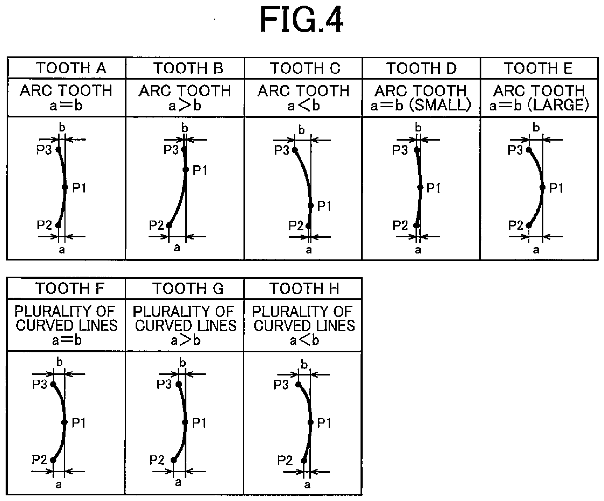

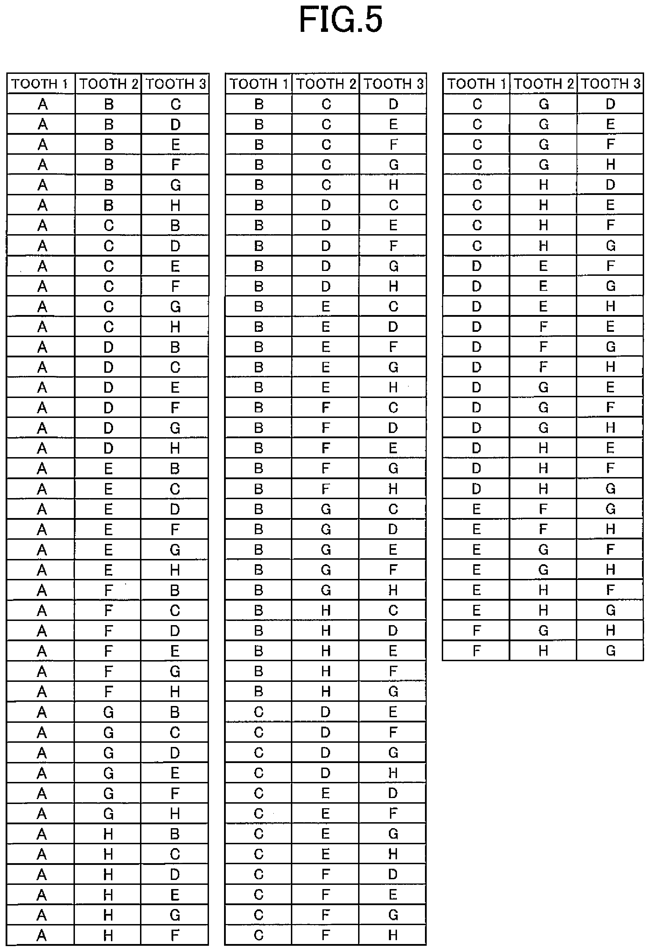

FIG. 4 is a set of views for explaining circumferential distance as still other examples of the teeth defining the peripheral cutting edges 20, wherein the teeth A-C are identical with the arc teeth A-C of FIG. 2, respectively. In the tooth D, the bottom-cutting-edge-side circumferential distance a and the shank-portion-side circumferential distance b are equal to each other as in the tooth A, and the distances a, b are smaller than those of the tooth A because a curvature of the arc is smaller, namely, a radius of the arc is larger than in the tooth A. In the tooth E, the bottom-cutting-edge-side circumferential distance a and the shank-portion-side circumferential distance b are equal to each other as in the tooth A, and the distances a, b are larger than those of the tooth A because a curvature of the arc is larger, namely, a radius of the arc is smaller than in the tooth A. In the tooth F in which the curved shape is defined by a plurality of curved lines, such that the curvature of the arc in vicinity of the recessed point P1 is equal to the curvature of the arc in the tooth A, and such that the curvature of the arc in vicinities of the bottom-cutting-edge side end P2 and the shank-portion side end P3 is larger than the curvature of the arc in the tooth A, so that the bottom-cutting-edge-side circumferential distance a and the shank-portion-side circumferential distance b are equal to each other, and the distances a, b are large than those of the tooth A. In the tooth G in which the curved shape is defined by a plurality of curved lines, such that the curvature of the arc in vicinity of the bottom-cutting-edge side end P2 is larger than the curvature of the arc in the tooth A, and such that the shank-portion-side circumferential distance b is equal to that of the tooth A while the bottom-cutting-edge-side circumferential distance a is larger than that of the tooth A. In the tooth H, in contrary to in the tooth G, the curvature of the arc in vicinity of the shank-portion side end P3 is larger than the curvature of the arc in the tooth A, such that the bottom-cutting-edge-side circumferential distance a is equal to that of the tooth A while the shank-portion-side circumferential distance b is larger than that of the tooth A. FIG.5 is a view showing combinations in which the three peripheral cutting edges 20 of the three-flute end mill 10 are defined by respective three kinds of teeth that are selected from among the eight kinds of teeth A-H of FIG.4. In FIG.5, "TOOTH 1", "TOOTH 2" and "TOOTH 3" are three teeth defining the respective peripheral cutting edges 20a, 20b, 20c, and "A"-"H" represent the respective teeth A-H shown in FIG.4. Each of the teeth A, D, E, F is an ab-equal curved tooth in which the bottom-cutting-edge-side circumferential distance a and the shank-portion-side circumferential distance b are equal to each other (a=b). Each of the teeth B, C, G, H is an ab-different curved tooth in which the bottom-cutting-edge-side circumferential distance a and the shank-portion-side circumferential distance b are different from each other (a≠b). Although not shown in FIG. 5, the three peripheral cutting edges 20 of the three-flute end mill 10 may be defined also by only one kind of teeth or two kinds of teeth that are selected from among the eight kinds of teeth A-H.

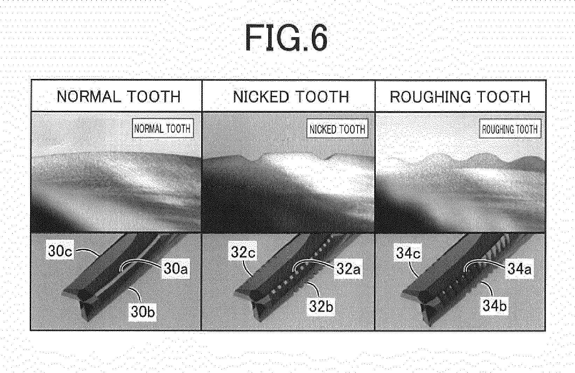

Although the peripheral cutting edges 20 of the end mill 10 may be defined by respective normal teeth 30a-30c (hereinafter simply referred to as "normal teeth 30" unless they are to be distinguished from one another) without a nicked portion nor a roughing portion, the peripheral cutting edges 20 may be defined also by respective nicked teeth 32a-32c (hereinafter simply referred to as "nicked teeth 32" unless they are to be distinguished from one another) or respective roughing teeth 34a-34c (hereinafter simply referred to as "roughing teeth 34" unless they are to be distinguished from one another). In FIG.6, each of photographs in its upper row shows, in enlargement, a corresponding one of the normal tooth 30, nicked tooth 32 and roughing tooth 34, as seen from a side of its rake face, while each of photographs in its lower row shows the tooth portion 14, as seen from a diagonal side of its distal end. Each of the normal teeth 30a-30c is constituted by one of the curved teeth each having a predetermined curved shape in the development view as shown in FIG.4. The nicked teeth 32a-32c and the roughing teeth 34a-34c correspond to the normal teeth 30a-30c (having the curved shapes) to which the nicked portions or roughing portions are added. For example, each of the nicked tooth 32a and roughing tooth 34a may be provided with the nicked or roughing portion that extends over the entirety of the tooth length L. However, it is also possible that each of the nicked tooth 32a and roughing tooth 34a is provided with the nicked or roughing portion that is disposed in a part of the tooth length L, for example, such that the nicked or roughing portion has a length ranging from 5% of the tooth length L to 65% of the tooth length L. In this case, the nicked or roughing portion may be provided in a center part of the tooth length L, on the side of the shank portion 12 or on the side of the bottom cutting edges 22. It is preferable that the nicked or roughing portion is provided in a position that varies among the nicked teeth 32a-32c or roughing teeth 34a-34c. For example, each of the nicked tooth 32a and roughing tooth 34a shown in FIG.6 is provided with the nicked or roughing portion that extends over the entirety of the tooth length L, each of the nicked tooth 32b and roughing tooth 34b shown in FIG.6 is provided with the nicked or roughing portion that extends over a part on the side of the shank portion 12, and each of the nicked tooth 32c and roughing tooth 34c shown in FIG.6 is provided with the nicked or roughing portion that extends over a part on the side of the bottom cutting edges 22. It is preferable that the nicked or roughing portion has a length ranging from 5% of the tooth length L to 65% of the tooth length L and is provided in a region extending by a distance corresponding to 70% of the tooth length L in the tool axial direction, such that the region extends from the shank-portion side end P3 toward the side of the bottom cutting edges 22 in the tool axial direction, or such that the region extends from the bottom-cutting-edge side end P2 toward the side of the shank portion 12 in the tool axial direction, or such that the region extends from a center of the tooth length L in directions opposite to each other in tool axial direction by a distance corresponding to 35% of the tooth length L.

In the end mill 10 constructed as described above, the three peripheral cutting edges 20, which are adjacent to each other, are defined by the curved teeth each of which is twisted in a twist direction reversed right and left on the way, and each of which has the curved shape curved in the arcuate or arched manner in the development view of the outer circumferential surface of the end mill 10 around the axis such that the corresponding one of the peripheral cutting edges 20 is provided on the concave side of the curved shape. Thus, a direction of a cutting force applied by each of the peripheral cutting edges 20 is continuously changed by change of twist or helix angle of the each of the peripheral cutting edges 20, whereby assure anti-vibration performance can be obtained. Further, owing to the curved teeth defining the respective peripheral cutting edges 20, it is possible to suppress occurrence of burrs or the like on upper and lower surfaces of a workpiece. Moreover, since each of the curved teeth has the smoothly curved shape, retention of chips is suppressed and restriction to a machining condition is relaxed, for example.

Further, where the curved shape of each of the curved teeth in the development view is defined by the arc that consists of the part of a perfect circle, namely, where each of the peripheral cutting edges 20 is defined by one of the teeth A-E shown in FIG.4, for example, the curvature of the curved shape is constant throughout the entire tooth length L of each of the curved teeth, and accordingly the helix angle of each of the peripheral cutting edges 20 is smoothly changed at a constant rate. Thus, it is possible to appropriately obtain the anti-vibration performance, and to suppress occurrence of the burrs or the like and retention of the chips.

Further, where the most recessed point P1 is located in the region extending from the bottom-cutting-edge side end P2 in the tool axial direction by a distance corresponding to 5%-95% of the tooth length L, and the circumferential distances a, b are both set in the range not smaller than the tooth length $L \times 0.0002$ and not larger than the tooth length $L \times 0.1300$, the curvature in vicinity of the bottom-cutting-edge side end P2 and in vicinity of the shank-portion side end P3 is relatively small, so that the chips are unlikely to stay on the concave side of the curved shape of each of the curved teeth and accordingly the chips are less tangled. Therefore, it is possible to appropriately obtain the anti-vibration performance owing to the curved teeth, and to suppress occurrence of the burrs or the like and retention of the chips.

Further, where the three peripheral cutting edges 20 are defined by one kind of teeth selected from among the normal teeth 30, the nicked teeth 32 and the roughing teeth 34, as shown in FIG. 6, it is possible to employ the end mill 10 having teeth whose shape is dependent on purpose such as a finishing operation, a semi-finishing operation and a roughing operation, and also a material of the workpiece.

Further, the surface of the tooth portion 14, which is provided with the plurality of peripheral cutting edges 20, is covered with the hard coating 24. Thus, excellent cutting durability can be obtained even in the teeth A-H shown in FIG.4 that are curved teeth each of which is twisted in the direction reversed right and left on the way.

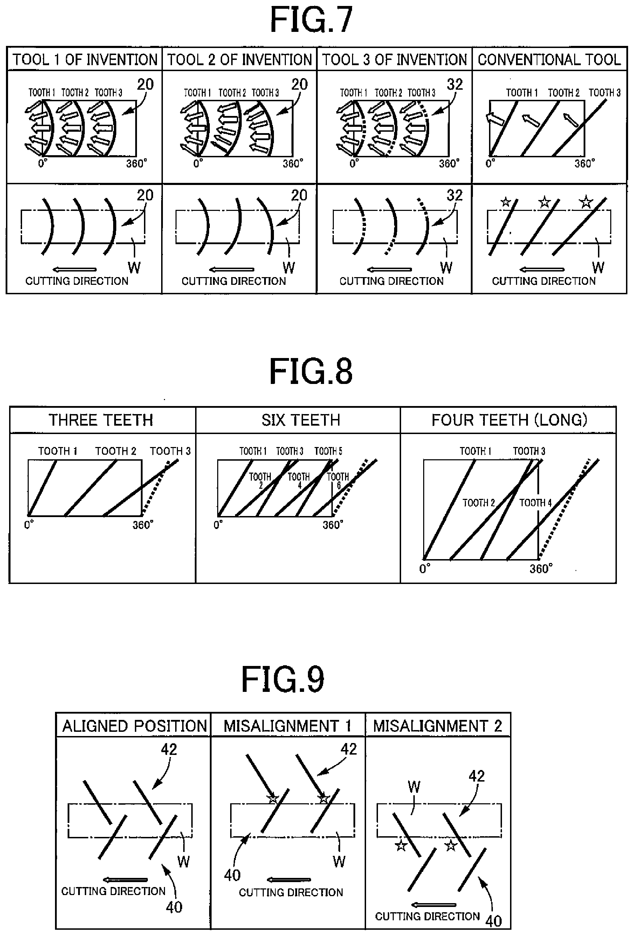

FIG.7 is a set of views showing trimming/cutting operations (outer periphery cutting operations) performed to a workpiece W by using tools 1-3 of the present invention (each corresponding to the above-described end mill 10) and a conventional variable-lead tool, wherein cutting forces applied by the teeth 1-3 are indicated by white arrows in the development views. The views of FIG.7 show also a positional relationship between each of the teeth 1-3 and the workpiece W. In the views of upper row of FIG.7, a direction of each of the white arrows represents a direction of a corresponding one of the cutting forces, and a width of each of the white arrows represents a magnitude of a corresponding one of the cutting forces. In the views of lower row of FIG.7 in which the positional relationship between each of the teeth 1-3 and the workpiece W is shown, the workpiece W is located on a front side while the tool having the peripheral cutting edges is located on a back side. In the tool 1 of the present invention, any of the three peripheral cutting edges 20 is defined by the arc tooth A shown in FIG. 2. In the tool 2 of the present invention, the three peripheral cutting edges 20 are defined by the respective arc teeth A, B, C shown in FIG. 2. In the tool 3 of the present invention, any one of the three peripheral cutting edges 20 is defined by the nicked tooth 32 as the arc tooth A shown in FIG.2, wherein the nicked portion is indicated by broken line. In any of the tools 1-3 of the present invention, the cutting forces are changed in the direction and magnitude, so that it is possible to suppress resonance, and to appropriately obtain anti-vibration effect as in the conventional variable-lead tool. Further, in the tools 1-3 of the present invention, each of the arc teeth (with or without the nicked portion) having the curved shapes and defining the cutting edges 20 is caused to cut both of upper and lower surfaces of the workpiece W with acute angles, so that occurrence of the burrs or the like appropriately suppressed. On the other hand, in the conventional tool, each tooth defines an obtuse angle on an upper surface side of the workpiece W, so that the burrs or the like are likely to occur in positions indicated by star marks. A size of each of the star marks represents a size of the burrs.

In the conventional variable-lead end mill, there is a case in which the tooth length, a number of the teeth and a difference of the helix angle are restricted since the peripheral cutting edges defined by the respective teeth could interfere with each other as shown in FIG. 8. For example, in a three-flute end mill shown in a left-side one of the views of FIG. 8, there is a case of interference of the teeth 3 and 1 having the respective helix angles whose difference is large. In a six-flute end mill shown in a middle one of the views of FIG. 8, there are cases of interferences of the teeth 2 and 3, the teeth 4 and 5 and the teeth 6 and 1, each pair of which are adjacent to each other with a narrow interval therebetween. In a long four-flute end mill shown in a right-side one of the views of FIG. 8, there are cases of interferences of the teeth 2 and 3, and the teeth 4 and 1, each pair of which are adjacent to each other even if a difference of the helix angles thereof is relatively small.

FIG.9 shows a herringbone-shaped end mill in which right-handed helical teeth 40 and left-handed helical teeth 42 are provided to be adjacent to one another so as to partially overlap in the tool axial direction. In this herringbone-shaped end mill shown in FIG.9, chips are likely to stay in portions in which the helical teeth 40, 42 overlap so that there is a case in which the machining condition is restricted due to clogging of the chips. Further, where the cutting operation is performed by only the right-handed helical teeth 40 with misalignment of the tool from the workpiece P toward side of the left-handed helical teeth 42, as in "MISALIGNMENT 1", the burrs or the like are likely to occur on the upper surface of the workpiece W, as indicated by the star marks. Where the cutting operation is performed by only the left-handed helical teeth 42 with misalignment of the tool from the workpiece P toward side of the right-handed helical teeth 40, as in "MISALIGNMENT 2", the burrs or the like are likely to occur on the lower surface of the workpiece W, as indicated by the star marks. Further, where a curved part is to be cut by moving the tool through a machining programming, a run-up machining or run-down machining is required whereby tooth chipping is likely to occur in the tool.

Next, there will be described some cutting tests performed for specifically clarifying effects of the present invention.

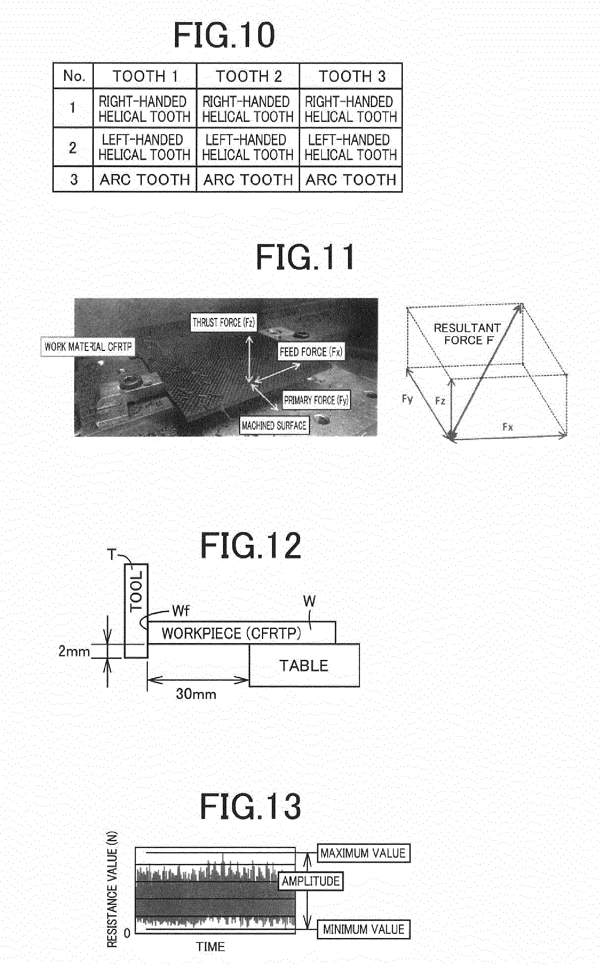

FIG. 10 is a view for explaining comparative tools (test samples Nos.1 and 2) and a tool of the present invention (test sample No.3), which were used in cutting tests, wherein "TEETH 1-3" define three peripheral cutting edges. The tool of the present invention (test samples No.3) is the end mill 10 in which each of the three teeth 1-3 is constituted by the arc tooth A shown in FIG.2. In the test samples Nos.1 and 2, the helix angles of the respective three "TEETH 1-3" are all 5°. In the test sample No. 3, the bottom-cutting-edge side circumferential distance a and the shank-portion side circumferential distance b are equal to each other and are equal to 0.26mm (a=b=0.26mm) in each of the three "TEETH 1-3". Each of the test samples Nos. 1-3 has a tooth length L of 12mm and a cutting diameter $\Phi$ of 6mm. FIG.11 is a view for explaining a resultant force F of resistance values that is measured in the cutting tests, wherein the resistance values are constituted by a feed force Fx in a direction of feed movement of the tool, a primary force Fy in a direction perpendicular to a machined surface and a thrust force Fz in the tool axial direction (thickness direction of the work material). The resultant force F corresponds to a load applied to the workpiece W. FIG. 12 is a view for explaining a positional relationship between the workpiece W and the tool T in the cutting tests in which trimming/cutting operations are performed to an outer circumferential surface of the workpiece W in a position protruding from a table by 30mm. In FIG. 12, "Wf" represents a machined surface. FIG. 13 is a view for explaining an amplitude of the resultant force F of resistance values measured in the cutting tests, wherein the amplitude corresponds a difference between a maximum value and a minimum value of the resultant force F.

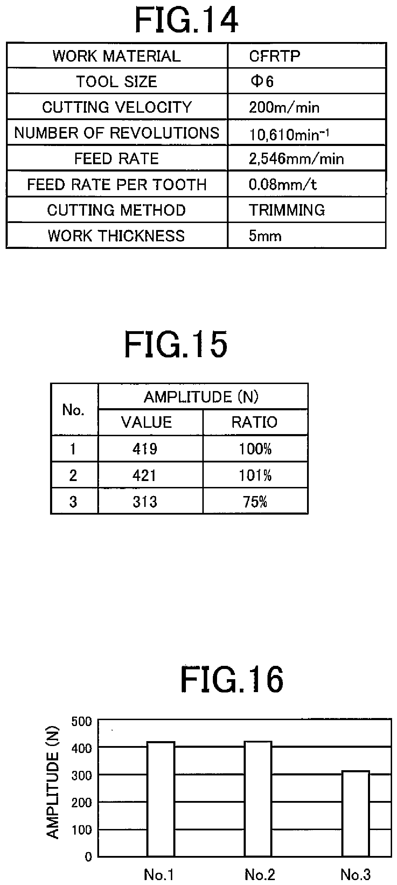

Then, the cutting operations were performed with a machining condition shown in FIG. 14, and the resultant force F was measured. FIG. 15 shows results in which the amplitude was obtained based on the measured resultant force F. From the results, it can be understood that the amplitude in the test sample No.3 as the tool of the present invention is smaller than the amplitude in each of the comparative tools having helical teeth (the test samples Nos. 1 and 2), by about 25%. In FIG. 15, "RATIO (%)" is a value relative to the amplitude in the test sample No.1. FIG. 16 is a view showing the values of the amplitude of FIG.16 by a graph in a comparative manner.

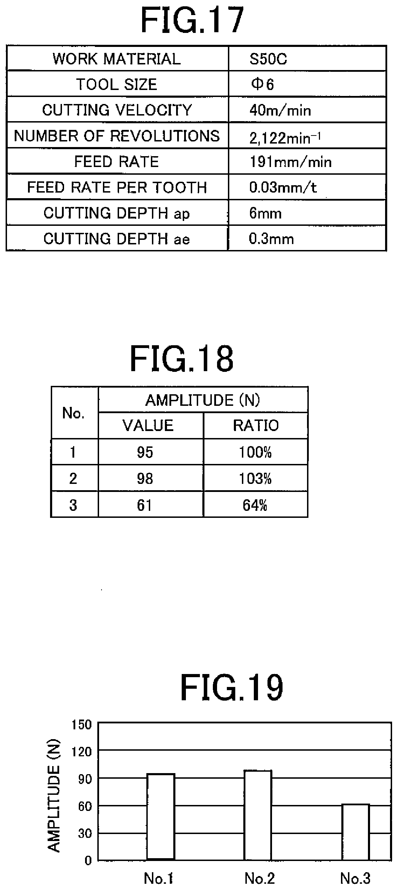

FIG. 17 shows a machining condition when other cutting tests performed, by the test samples Nos. 1-3 shown in FIG.10, to a different work material, wherein side machining operations were performed to S50C (carbon steels for machine structural use) with a cutting depth ap (in axial direction) of 6mm and a cutting depth ae (in radial direction) of 0.3mm. FIG.18 is a view showing values of the amplitude of the measured resultant force F and their ratios relative to the ratio in the test sample No.1 that is indicated by 100%. The amplitude was smaller by about 36% in the test sample No.3 as the tool of the present invention, as compared with in the comparative tools having helical teeth (the test samples Nos. 1 and 2). FIG. 19 is a view showing the values of the amplitude in FIG. 18 by a graph in a comparative manner.

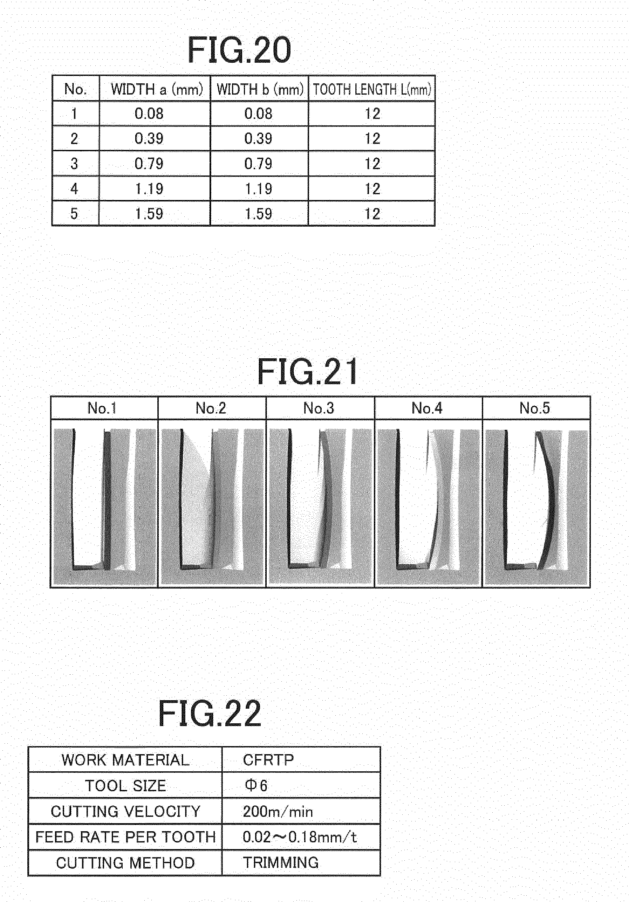

FIGS.20-24 are views for explaining results of still other cutting tests. FIG.20 is a view for explaining five kinds of test samples Nos.1-5 that are different from one another in terms of the bottom-cutting-edge-side circumferential distance a and the shank-portion-side circumferential distance b of the curved shape, which are equal to each other (a=b). That is, each of the test samples Nos. 1-5, which are different from one another in terms of the bottom-cutting-edge-side circumferential distance a and the shank-portion-side circumferential distance b and which are tools of the present invention, is the end mill 10 in which each of the three peripheral cutting edges 20 is constituted by the arc tooth A shown in FIG. 2. Where the tooth length L is 12mm, L×0.0002 and L×0.1300, which are in the above-described expressions (1) and (2), are 0.0024mm and 1.56mm, respectively, so that the expressions (1) and (2) are satisfied except in the test sample No.5. FIG.21 is a set of photographs showing the curved shapes of the peripheral cutting edges 20 of the five kinds of test samples Nos.1-5 of FIG.20. The curvature of the curved shape is increased with increases of the bottom-cutting-edge-side circumferential distance a and the shank-portion-side circumferential distance b.

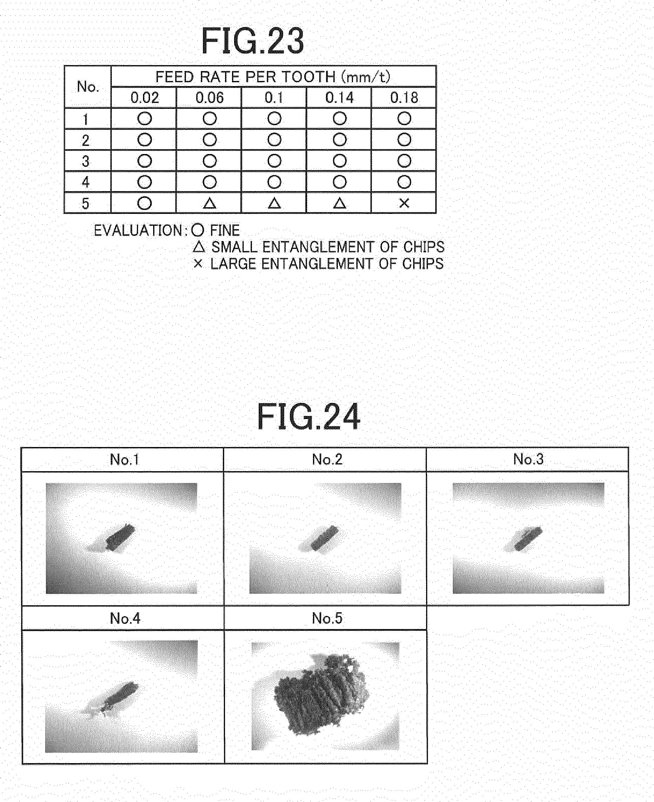

FIG.23 shows results of cutting tests in which cutting operations were performed with various values of a feed rate per tooth in a machining condition of FIG.22 and then entanglement of chips was checked. As shown in FIG. 23, in each of the test samples Nos. 1-4, the entanglement of the chips was not seen as long as the feed rate per tooth was in a range from 0.02mm/t to 0.18mm/t. On the other hand, in the test sample No.5 in which the bottom-cutting-edge-side circumferential distance a and the shank-portion-side circumferential distance b are relatively large, the entanglement of the chips was seen a little with the feed rate per tooth being in a range from 0.06mm/t to 0.14mm/t, and the entanglement of the chips was so large that the cutting operation could not be performed with the feed rate per tooth being 0.18mm/t. FIG.24 is a set of photographs showing the chips generated when the cutting operations were performed by the test samples Nos.1-4 at the feed rate per tooth of 0.18mm/t. As shown in a corresponding one of the photographs of FIG. 24, many chips are entangled to form a large mass in the test sample No.5. It is considered that the curvature of the arc of each of the peripheral cutting edges 20 is increased with increase of each of the bottom-cutting-edge-side circumferential distance a and the shank-portion-side circumferential distance b, so that the chips are more likely to stay in the concave side of the curved shape of each of the curved teeth defining the respective peripheral cutting edges 20, and to be entangled to form the large mass. From the results, it is preferable that each of the bottom-cutting-edge-side circumferential distance a and the shank-portion-side circumferential distance b is in a range from about 0.08mm to 1.19mm.

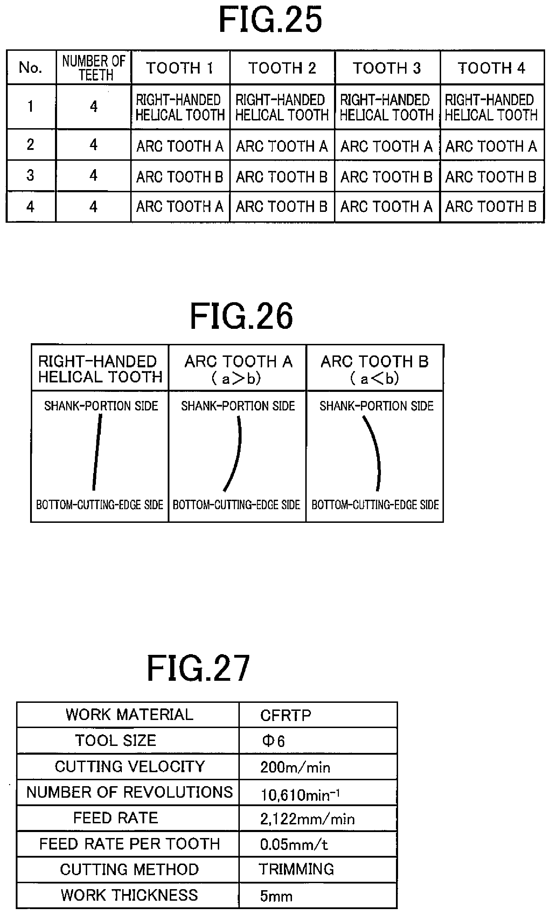

FIGS.25-29 are views for explaining results of still other cutting tests. FIG.25 is a view for explaining four kinds of test samples Nos. 1-4 of four-flute end mills. FIG.26 is a set of views for specifically explaining shapes of teeth 1-4 of the four kinds of test samples Nos. 1-4, wherein the teeth 1-4 define respective peripheral cutting edges of each of the test samples Nos. 1-4. The test sample No. 1 is a conventional tool in which each of the four teeth 1-4 is a right-handed helical tooth that is twisted rightward at the helical angle of 5°. Each of the test samples Nos. 2-4 is a tool of the present invention in which the four teeth 1-4 are constituted by respective arc teeth. In the test samples No.2, each of the four teeth 1-4 is constituted by the arc tooth A of FIG. 26 in which the bottom-cutting-edge-side circumferential distance a is larger than the shank-portion-side circumferential distance b, wherein the bottom-cutting-edge-side circumferential distance a is 0.96mm while the shank-portion-side circumferential distance b is 0.01mm. In the test samples No.3, each of the four teeth 1-4 is constituted by the arc tooth B of FIG. 26 in which the bottom-cutting-edge-side circumferential distance a is smaller than the shank-portion-side circumferential distance b, wherein the bottom-cutting-edge-side circumferential distance a is 0.01mm while the shank-portion-side circumferential distance b is 0.96mm. In the test samples No.4, the four teeth 1-4 are constituted by the arc teeth A, B that are alternately arranged.

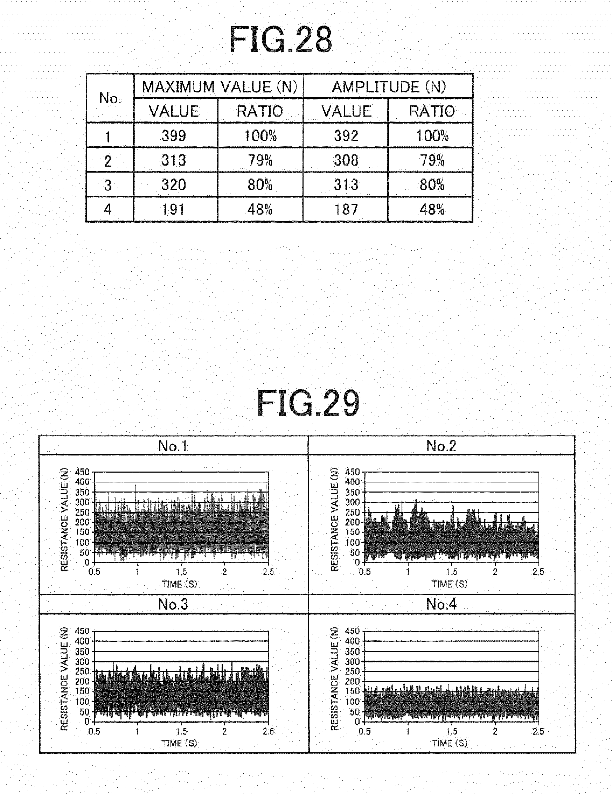

Then, the cutting operations were performed with a machining condition shown in FIG.27, and the resultant force F was measured. FIG. 28 shows results of the cutting operations, namely, a maximum value and an amplitude of the resultant force F, and ratios of the maximum value and the amplitude, wherein the ratios of the maximum value and the amplitude are relative to those in the test sample No.1 that are indicated by 100%. FIG.29 is a set of views each showing an actual vibration waveform of the resultant force F of resistance values measured in the cutting operations, in a comparative manner. From the results, it can be understood that the maximum value and amplitude of the resultant force F were smaller by about 20-21% in each of the test samples Nos.2 and 3 as the tools of the present invention, than in the test sample No.1 as the conventional tool in which each of the four teeth 1-4 is the right-handed helical tooth, and that the maximum value and amplitude of the resultant force F were smaller by about 52% in the test sample No.4 as the tool of the present invention in which the two types of arc teeth A, B are alternately arranged, than in the test sample No.1 as the conventional tool of the right-handed helical teeth.

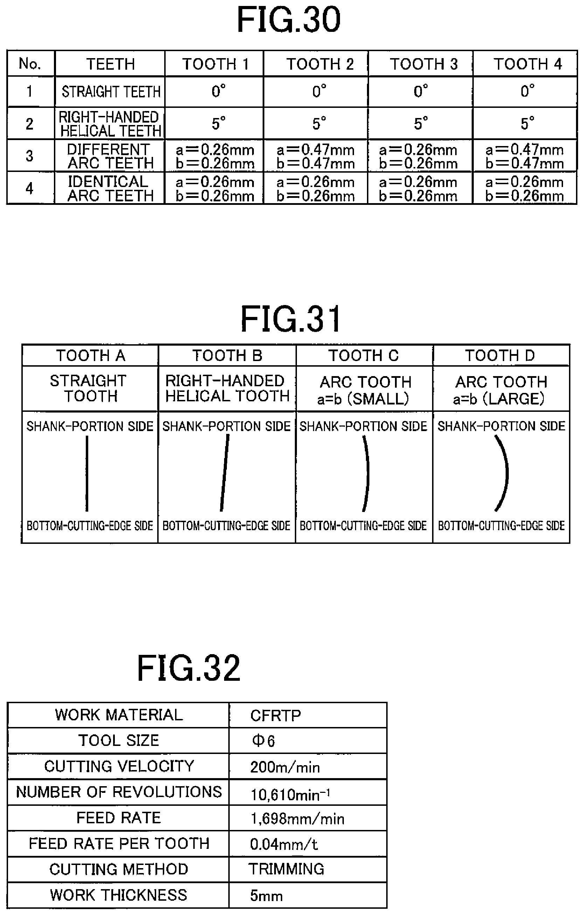

FIGS.30-34 are views for explaining results of still other cutting tests. FIG.30 is a view for explaining four kinds of test samples Nos.1-4 of four-flute end mills in each of which teeth 1-4 define the respective peripheral cutting edges. The test sample No.1 is a conventional tool in which each of the four teeth 1-4 is constituted by the tooth A of FIG. 31 that is a straight tooth with the helix angle being 0°. The test sample No.2 is a conventional tool in which each of the four teeth 1-4 is constituted by the tooth B of FIG. 31 that is a right-handed helical tooth that is twisted rightward at the helical angle of 5°. The test samples Nos. 3 and 4 are tools of the present invention. In the test sample No.3, the four teeth 1-4 are constituted by arc teeth in the form of the two types of teeth C and D of FIG. 31 that are alternately arranged, wherein the teeth C and D are both the ab-equal curved teeth in which the bottom-cutting-edge-side circumferential distance a and the shank-portion-side circumferential distance b are equal to each other, and wherein the teeth C and D are different from each other in terms of the bottom-cutting-edge-side circumferential distance a and the shank-portion-side circumferential distance b. In the test sample No.4, the four teeth 1-4 are constituted by arc teeth consist of only one type of teeth C of FIG. 31 that are the ab-equal curved teeth in which the bottom-cutting-edge-side circumferential distance a and the shank-portion-side circumferential distance b are equal to each other and are relatively small.

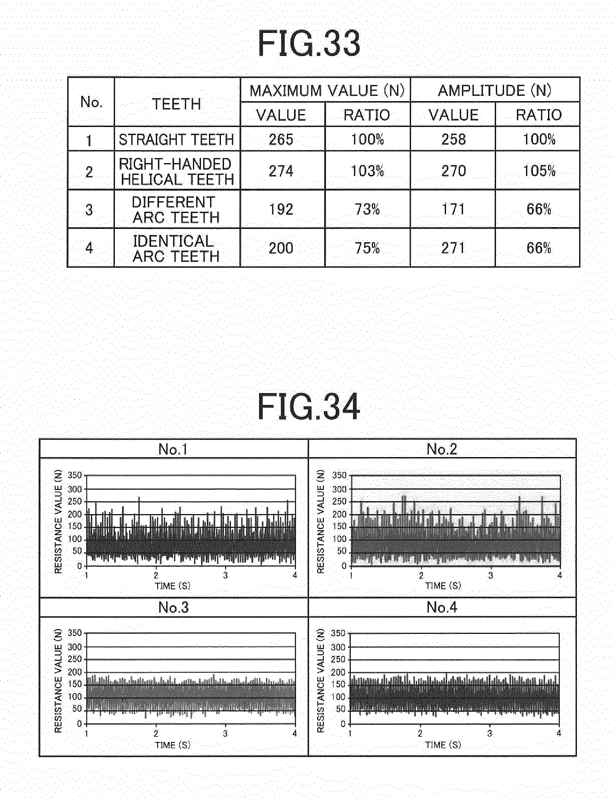

Then, the cutting operations were performed with a machining condition shown in FIG.32, and the resultant force F was measured. FIG. 33 shows results of the cutting operations, namely, a maximum value and an amplitude of the resultant force F, and ratios of the maximum value and the amplitude, wherein the ratios of the maximum value and the amplitude are relative to those in the test sample No. 1 that are indicated by 100%. FIG.34 is a set of views each showing an actual vibration waveform of the resultant force F of resistance values measured in the cutting operations, in a comparative manner. From the results, it can be understood that the maximum value of the resultant force F was smaller by about 25-27% in each of the test samples Nos.3 and 4 as the tools of the present invention, than in the test sample No. 1 as the conventional tool in which each of the four teeth 1-4 is the straight tooth, and that the amplitude of the resultant force F was smaller by about 34% in each of the test samples Nos.3 and 4 as the tools of the present invention, than in the test sample No. 1 as the conventional tool. It is noted that no significant difference was observed between the test samples Nos.3 and 4, wherein the test sample No.3 whose four teeth 1-4 are constituted by the two different types of teeth, while the test sample No.4 whose four teeth 1-4 are constituted by the identical teeth. Further, the maximum value of the resultant force F and the ratios were larger by about 3-5% in the test sample No.2 as the conventional tool with the right-handed helical teeth, than the test sample No. 1 as the conventional tool with the straight teeth.

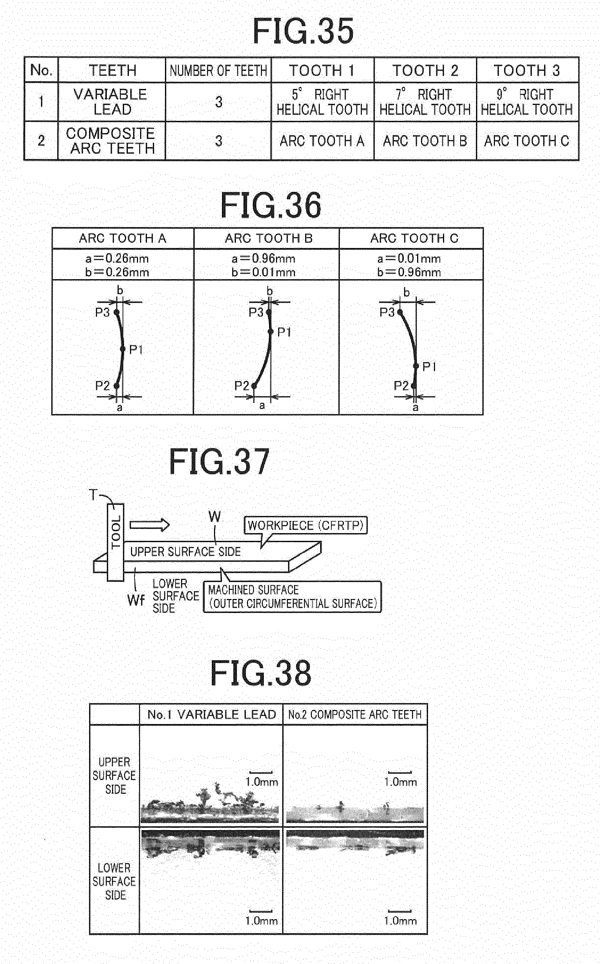

FIGS.35-38 are views for explaining results of still other cutting tests. FIG.35 is a view for explaining two kinds of test samples Nos.1 and 2 of three-flute end mills in each of which teeth 1-3 define the respective peripheral cutting edges. The test sample No. 1 is a conventional variable-lead tool in which the three teeth 1-3 are constituted by respective right-handed helical teeth that are different from one another in terms of the helix angle, wherein the helix angle of the tooth 1 is 5°, the helix angle of the tooth 2 is 7°, and the helix angle of the tooth 3 is 9°. The test sample No.2 is a tool of the present invention in which the three teeth 1-3 are constituted by composite arc teeth in the form of three types of arc teeth A, B and C shown in FIG. 36. The arc tooth A is the ab-equal curved tooth in which the bottom-cutting-edge-side circumferential distance a and the shank-portion-side circumferential distance b are equal to each other. The arc tooth B is the ab-different curved tooth in which the bottom-cutting-edge-side circumferential distance a is larger than the shank-portion-side circumferential distance b. The arc tooth C is the ab-different curved tooth in which the bottom-cutting-edge-side circumferential distance a is smaller than the shank-portion-side circumferential distance b.

Then, the cutting operations were performed as shown in FIG.37 with a machining condition shown in FIG. 14, and occurrence of the burrs in upper and lower side portions of a machined surface Wf of a workpiece W was checked. FIG. 38 shows results of the cutting operations. FIG.38 is a set of views showing photographs of the burrs generated in the upper and lower side portions of the machined surface Wf, in a comparative manner. The burrs were generated less in the upper and lower side portions in the test sample No.2 with the composite arc teeth as the tool of the present invention, than in the test sample No.1 as the conventional variable-lead tool.

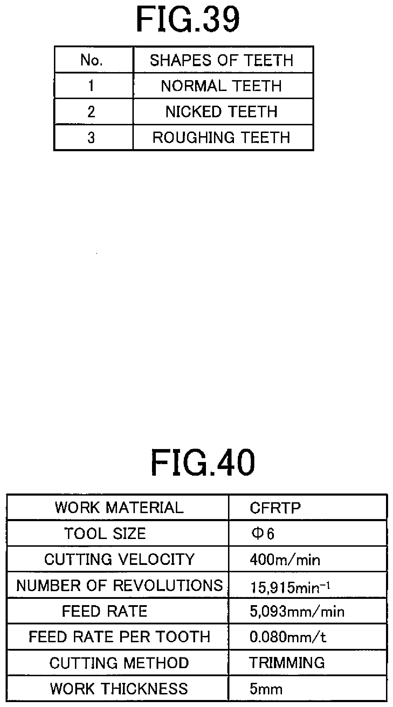

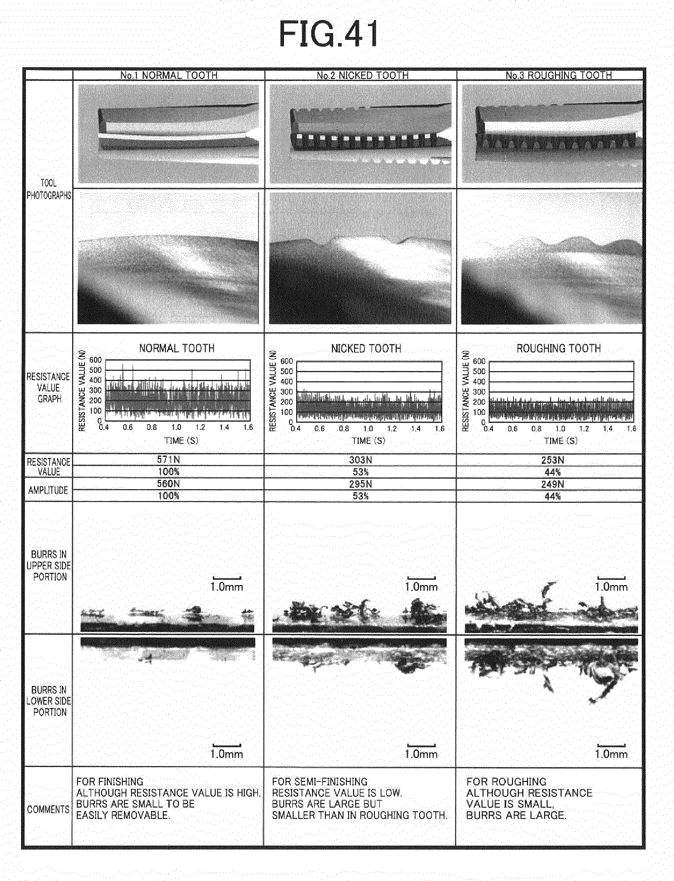

FIGS.39-41 are views for explaining results of still other cutting tests. FIG.39 is a view for explaining three kinds of test samples Nos. 1-3 of three-flute end mills. As shown in tool photographs of FIGS.6 and 41, the test samples Nos.1-3 are tools of the present invention in each of which the peripheral cutting edges 20 are defined by the normal teeth 30, the nicked teeth 32 or the roughing teeth 34. The test sample No. 1 is the end mill 10 in which each of the three normal teeth 30 is constituted by the arc tooth A of FIG. 2, wherein the bottom-cutting-edge-side circumferential distance a and the shank-portion-side circumferential distance b are equal to each other, and are 0.26mm. In each of the test samples Nos.2 and 3, the nicked teeth 32c and the roughing teeth 34 correspond to the normal teeth 30 of the test sample No. 1 to which the nicked portions or roughing portions are added.

Then, the cutting operations were performed with a machining condition shown in FIG.40, and a vibration waveform of resistance value of the resultant force F, a maximum value and an amplitude of the resultant force F, ratios of the maximum value and the amplitude relative to those in the test sample No. 1 that are indicated by 100%, and occurrence of the burr in upper and lower side portions of the machined surface were checked. FIG. 41 shows the obtained results. From the results, it can be understood that the test sample No.3 provided with the roughing teeth 34 can be advantageously used for a roughing operation, for example, because the maximum value and the amplitude of the resultant force F were both smaller by about 56% although the burrs on the upper and lower side portions were larger, as compared with the test sample No. 1 provided with the normal teeth 30. Further, it can be understood that the test sample No.2 provided with the nicked teeth 32 can be advantageously used for a semi-finishing operation, for example, because the maximum value and the amplitude of the resultant force F were both smaller by about 47% although the burrs on the upper and lower side portions were larger, as compared with the test sample No. 1 provided with the normal teeth 30. The burrs generated in the test sample No.2 were smaller than those generated in the test sample No. 3 provided with the roughing teeth 34.

While the embodiment of the present invention has been described in detail by reference to the accompanying drawings, it is to be understood that the described embodiment is merely an embodied form and that the present invention can be embodied with various modifications and improvements on the basis of knowledge of those skilled in the art.

DESCRIPTION OF REFERENCE SIGNS

10: end mill
12: shank portion
14: tooth portion
20a, 20b, 20c: peripheral cutting edge (curved tooth)
22a, 22b, 22c: bottom cutting edge
24: hard coating

30a, 30b, 30c: normal tooth
32a, 32b, 32c: nicked tooth
34a, 34b, 34c: roughing tooth
L: tooth length
P1: recessed point (most recessed point)
P2: bottom-cutting-edge side end
P3: shank-portion side end
a: bottom-cutting-edge-side circumferential distance
b: shank-portion-side circumferential distance

## Claims

1. An end mill comprising a plurality of peripheral cutting edges, the end mill being **characterized in that**: the plurality of peripheral cutting edges, which are adjacent to each other, are defined by curved teeth each of which is twisted in a twist direction reversed right and left on a way thereof, and each of which has a curved shape curved in an arcuate or arched manner in a development view of an outer circumferential surface of the end mill around an axis such that a corresponding one of the peripheral cutting edges is provided on a concave side of the curved shape.

2. The end mill according to claim 1, being **characterized in that**: the curved shape of each of the curved teeth in the development view is defined by an arc that consists of a part of a perfect circle.

3. The end mill according to claim 1 or 2, being **characterized in that**: where a most recessed point of the curved shape of each of the curved teeth in the development view is represented by P1, a bottom-cutting-edge side end of the curved shape in a tool axial direction is represented by P2, and a shank-portion side end of the curved shape in the tool axial direction is represented by P3, a circumferential distance a between the most recessed point P1 and the bottom-cutting-edge side end P2 and a circumferential distance b between the most recessed point P1 and the shank-portion side end P3 are both set in a range not smaller than a tooth length×0.0002 and not larger than the tooth length×0.1300, and the most recessed point P1 is located in a region extending from the bottom-cutting-edge side end P2 in the tool axial direction by a distance corresponding to 5-95% of the tooth length.

4. The end mill according to any one of claims 1-3, being **characterized in that**: where a most recessed point of the curved shape of each of the curved teeth in the development view is represented by P1, a bottom-cutting-edge side end of the curved shape in a tool axial direction is represented by P2, a shank-portion side end of the curved shape in the tool axial direction is represented by P3, a circumferential distance between the most recessed point P1 and the bottom-cutting-edge side end P2 is represented by a, and a circumferential distance between the most recessed point P1 and the shank-portion side end P3 is represented by b, the circumferential distance a and the circumferential distance b are different from each other in each of the curved teeth, and each two of the curved teeth defining respective two of the peripheral cutting edges that are adjacent to each other are different from each other in terms of the circumferential distance a and the circumferential distance b.

5. The end mill according to any one of claims 1-3, being **characterized in that**:
where a most recessed point of the curved shape of each of the curved teeth in the development view is represented by P1, a bottom-cutting-edge side end of the curved shape in a tool axial direction is represented by P2, a shank-portion side end of the curved shape in the tool axial direction is represented by P3, a circumferential distance between the most recessed point P1 and the bottom-cutting-edge side end P2 is represented by a, and a circumferential distance between the most recessed point P1 and the shank-portion side end P3 is represented by b, the circumferential distance a and the circumferential distance b are different from each other in each of the curved teeth, and each two of the curved teeth defining respective two of the peripheral cutting edges that are adjacent to each other are identical in shape with each other and are same as each other in terms of the circumferential distance a and the circumferential distance b.

6. The end mill according to any one of claims 1-3, being **characterized in that**:
where a most recessed point of the curved shape of each of the curved teeth in the development view is represented by P1, a bottom-cutting-edge side end of the curved shape in a tool axial direction is represented by P2, a shank-portion side end of the curved shape in the tool axial direction is represented by P3, a circumferential distance between the most recessed point P1 and the bottom-cutting-edge side end P2 is represented by a, and a circumferential distance between the most recessed point P1 and the shank-portion side end P3 is represented by b, the circumferential distance a and the circumferential distance b are equal to each other in each of the curved teeth, and each two of the curved teeth defining respective two of the peripheral cutting edges that are adjacent to each other are different from each other in terms of the circumferential distance a and the circumferential distance b.

7. The end mill according to any one of claims 1-3, being **characterized in that**:
where a most recessed point of the curved shape of each of the curved teeth in the development view is represented by P1, a bottom-cutting-edge side end of the curved shape in a tool axial direction is represented by P2, a shank-portion side end of the curved shape in the tool axial direction is represented by P3, a circumferential distance between the most recessed point P1 and the bottom-cutting-edge side end P2 is represented by a, and a circumferential distance between the most recessed point P1 and the shank-portion side end P3 is represented by b, the circumferential distance a and the circumferential distance b are equal to each other in each of the curved teeth, and each two of the curved teeth defining respective two of the peripheral cutting edges that are adjacent to each other are identical in shape with each other and are same as each other in terms of the circumferential distance a and the circumferential distance b.

8. The end mill according to any one of claims 1-3, being **characterized in that**:
where a most recessed point of the curved shape of each of the curved teeth in the development view is represented by P1, a bottom-cutting-edge side end of the curved shape in a tool axial direction is represented by P2, a shank-portion side end of the curved shape in the tool axial direction is represented by P3, a circumferential distance between the most recessed point P1 and the bottom-cutting-edge side end P2 is represented by a, and a circumferential distance between the most recessed point P1 and the shank-portion side end P3 is represented by b, the circumferential distance a and the circumferential distance b are different from each other in an ab-different curved tooth, and are equal to each other in an ab-equal curved tooth, wherein the ab-different curved tooth and the ab-equal curved tooth are included in the curved teeth.

9. The end mill according to any one of claims 1-8, being **characterized in that** the plurality of peripheral cutting edges, which are adjacent to each other, are defined by one kind of teeth selected from among normal teeth, nicked teeth and roughing teeth.

10. The end mill according to any one of claims 1-9, being **characterized in that** a surface of a tooth portion, which is provided with the plurality of peripheral cutting edges, is covered with a hard coating.

# FIG.1

# FIG.2

| ARC TOOTH A | ARC TOOTH B | ARC TOOTH C |
|---|---|---|
| $a = b$ | $a > b$ | $a < b$ |

# FIG.3

| 0% | 5% | 50% | 95% | 100% |
|---|---|---|---|---|

# FIG.4

| TOOTH A | TOOTH B | TOOTH C | TOOTH D | TOOTH E |
|---|---|---|---|---|
| ARC TOOTH $a=b$ | ARC TOOTH $a>b$ | ARC TOOTH $a<b$ | ARC TOOTH $a=b$ (SMALL) | ARC TOOTH $a=b$ (LARGE) |

| TOOTH F | TOOTH G | TOOTH H |
|---|---|---|
| PLURALITY OF CURVED LINES $a=b$ | PLURALITY OF CURVED LINES $a>b$ | PLURALITY OF CURVED LINES $a<b$ |

# FIG.5

| TOOTH 1 | TOOTH 2 | TOOTH 3 |
|---|---|---|
| A | B | C |
| A | B | D |
| A | B | E |
| A | B | F |
| A | B | G |
| A | B | H |
| A | C | B |
| A | C | D |
| A | C | E |
| A | C | F |
| A | C | G |
| A | C | H |
| A | D | B |
| A | D | C |
| A | D | E |
| A | D | F |
| A | D | G |
| A | D | H |
| A | E | B |
| A | E | C |
| A | E | D |
| A | E | F |
| A | E | G |
| A | E | H |
| A | F | B |
| A | F | C |
| A | F | D |
| A | F | E |
| A | F | G |
| A | F | H |
| A | G | B |
| A | G | C |
| A | G | D |
| A | G | E |
| A | G | F |
| A | G | H |
| A | H | B |
| A | H | C |
| A | H | D |
| A | H | E |
| A | H | G |
| A | H | F |

| TOOTH 1 | TOOTH 2 | TOOTH 3 |
|---|---|---|
| B | C | D |
| B | C | E |
| B | C | F |
| B | C | G |
| B | C | H |
| B | D | C |
| B | D | E |
| B | D | F |
| B | D | G |
| B | D | H |
| B | E | C |
| B | E | D |
| B | E | F |
| B | E | G |
| B | E | H |
| B | F | C |
| B | F | D |
| B | F | E |
| B | F | G |
| B | F | H |
| B | G | C |
| B | G | D |
| B | G | E |
| B | G | F |
| B | G | H |
| B | H | C |
| B | H | D |
| B | H | E |
| B | H | F |
| B | H | G |
| C | D | E |
| C | D | F |
| C | D | G |
| C | D | H |
| C | E | D |
| C | E | F |
| C | E | G |
| C | E | H |
| C | F | D |
| C | F | E |
| C | F | G |
| C | F | H |

| TOOTH 1 | TOOTH 2 | TOOTH 3 |
|---|---|---|
| C | G | D |
| C | G | E |
| C | G | F |
| C | G | H |
| C | H | D |
| C | H | E |
| C | H | F |
| C | H | G |
| D | E | F |
| D | E | G |
| D | E | H |
| D | F | E |
| D | F | G |
| D | F | H |
| D | G | E |
| D | G | F |
| D | G | H |
| D | H | E |
| D | H | F |
| D | H | G |
| E | F | G |
| E | F | H |
| E | G | F |
| E | G | H |
| E | H | F |
| E | H | G |
| F | G | H |
| F | H | G |

EP 4 252 944 A1

# FIG.6

| NORMAL TOOTH | NICKED TOOTH | ROUGHING TOOTH |
|---|---|---|

# FIG.7

| TOOL 1 OF INVENTION | TOOL 2 OF INVENTION | TOOL 3 OF INVENTION | CONVENTIONAL TOOL |
|---|---|---|---|
| TOOTH 1 TOOTH 2 TOOTH 3  20<br>0°  360° | TOOTH 1 TOOTH 2 TOOTH 3  20<br>0°  360° | TOOTH 1 TOOTH 2 TOOTH 3  32<br>0°  360° | TOOTH 1 TOOTH 2 TOOTH 3<br>0°  360° |
| 20<br>W<br>CUTTING DIRECTION | 20<br>W<br>CUTTING DIRECTION | 32<br>W<br>CUTTING DIRECTION | ☆ ☆ ☆<br>W<br>CUTTING DIRECTION |

# FIG.8

| THREE TEETH | SIX TEETH | FOUR TEETH (LONG) |
|---|---|---|
| TOOTH 1 TOOTH 2 TOOTH 3<br>0°  360° | TOOTH 1 TOOTH 3 TOOTH 5<br>TOOTH 2 TOOTH 4 TOOTH 6<br>0°  360° | TOOTH 1 TOOTH 3<br>TOOTH 2 TOOTH 4<br>0°  360° |

# FIG.9

| ALIGNED POSITION | MISALIGNMENT 1 | MISALIGNMENT 2 |
|---|---|---|
| 42<br>W<br>CUTTING DIRECTION<br>40 | 42<br>W<br>40<br>CUTTING DIRECTION | W  42<br>☆ ☆<br>CUTTING DIRECTION  40 |

18

# FIG.10

| No. | TOOTH 1 | TOOTH 2 | TOOTH 3 |
|---|---|---|---|
| 1 | RIGHT-HANDED HELICAL TOOTH | RIGHT-HANDED HELICAL TOOTH | RIGHT-HANDED HELICAL TOOTH |
| 2 | LEFT-HANDED HELICAL TOOTH | LEFT-HANDED HELICAL TOOTH | LEFT-HANDED HELICAL TOOTH |
| 3 | ARC TOOTH | ARC TOOTH | ARC TOOTH |

# FIG.11

# FIG.12

# FIG.13

# FIG.14

| WORK MATERIAL | CFRTP |
|---|---|
| TOOL SIZE | Φ6 |
| CUTTING VELOCITY | 200m/min |
| NUMBER OF REVOLUTIONS | 10,610min$^{-1}$ |
| FEED RATE | 2,546mm/min |
| FEED RATE PER TOOTH | 0.08mm/t |
| CUTTING METHOD | TRIMMING |
| WORK THICKNESS | 5mm |

# FIG.15

| No. | AMPLITUDE (N) | |
|---|---|---|
| | VALUE | RATIO |
| 1 | 419 | 100% |
| 2 | 421 | 101% |
| 3 | 313 | 75% |

# FIG.16

# FIG.17

| WORK MATERIAL | S50C |
|---|---|
| TOOL SIZE | Φ6 |
| CUTTING VELOCITY | 40m/min |
| NUMBER OF REVOLUTIONS | 2,122min$^{-1}$ |
| FEED RATE | 191mm/min |
| FEED RATE PER TOOTH | 0.03mm/t |
| CUTTING DEPTH ap | 6mm |
| CUTTING DEPTH ae | 0.3mm |

# FIG.18

| No. | AMPLITUDE (N) | |
|---|---|---|
| | VALUE | RATIO |
| 1 | 95 | 100% |
| 2 | 98 | 103% |
| 3 | 61 | 64% |

# FIG.19

# FIG.20

| No. | WIDTH a (mm) | WIDTH b (mm) | TOOTH LENGTH L(mm) |
|-----|--------------|--------------|--------------------|
| 1 | 0.08 | 0.08 | 12 |
| 2 | 0.39 | 0.39 | 12 |
| 3 | 0.79 | 0.79 | 12 |
| 4 | 1.19 | 1.19 | 12 |
| 5 | 1.59 | 1.59 | 12 |

# FIG.21

| No.1 | No.2 | No.3 | No.4 | No.5 |
|------|------|------|------|------|

# FIG.22

| WORK MATERIAL | CFRTP |
|---------------|-------|
| TOOL SIZE | Φ6 |
| CUTTING VELOCITY | 200m/min |
| FEED RATE PER TOOTH | 0.02~0.18mm/t |
| CUTTING METHOD | TRIMMING |

# FIG.23

| No. | FEED RATE PER TOOTH (mm/t) | | | | |
|-----|------|------|-----|------|------|
|     | 0.02 | 0.06 | 0.1 | 0.14 | 0.18 |
| 1 | ◯ | ◯ | ◯ | ◯ | ◯ |
| 2 | ◯ | ◯ | ◯ | ◯ | ◯ |
| 3 | ◯ | ◯ | ◯ | ◯ | ◯ |
| 4 | ◯ | ◯ | ◯ | ◯ | ◯ |
| 5 | ◯ | △ | △ | △ | × |

EVALUATION: ◯ FINE
△ SMALL ENTANGLEMENT OF CHIPS
× LARGE ENTANGLEMENT OF CHIPS

# FIG.24

# FIG.25

| No. | NUMBER OF TEETH | TOOTH 1 | TOOTH 2 | TOOTH 3 | TOOTH 4 |
|---|---|---|---|---|---|
| 1 | 4 | RIGHT-HANDED HELICAL TOOTH | RIGHT-HANDED HELICAL TOOTH | RIGHT-HANDED HELICAL TOOTH | RIGHT-HANDED HELICAL TOOTH |
| 2 | 4 | ARC TOOTH A | ARC TOOTH A | ARC TOOTH A | ARC TOOTH A |
| 3 | 4 | ARC TOOTH B | ARC TOOTH B | ARC TOOTH B | ARC TOOTH B |
| 4 | 4 | ARC TOOTH A | ARC TOOTH B | ARC TOOTH A | ARC TOOTH B |

# FIG.26

| RIGHT-HANDED HELICAL TOOTH | ARC TOOTH A ($a>b$) | ARC TOOTH B ($a<b$) |
|---|---|---|
| SHANK-PORTION SIDE | SHANK-PORTION SIDE | SHANK-PORTION SIDE |
| BOTTOM-CUTTING-EDGE SIDE | BOTTOM-CUTTING-EDGE SIDE | BOTTOM-CUTTING-EDGE SIDE |

# FIG.27

| WORK MATERIAL | CFRTP |
|---|---|
| TOOL SIZE | Φ6 |
| CUTTING VELOCITY | 200m/min |
| NUMBER OF REVOLUTIONS | 10,610min$^{-1}$ |
| FEED RATE | 2,122mm/min |
| FEED RATE PER TOOTH | 0.05mm/t |
| CUTTING METHOD | TRIMMING |
| WORK THICKNESS | 5mm |

EP 4 252 944 A1

# FIG.28

| No. | MAXIMUM VALUE (N) | | AMPLITUDE (N) | |
|-----|-------|-------|-------|-------|
| | VALUE | RATIO | VALUE | RATIO |
| 1 | 399 | 100% | 392 | 100% |
| 2 | 313 | 79% | 308 | 79% |
| 3 | 320 | 80% | 313 | 80% |
| 4 | 191 | 48% | 187 | 48% |

# FIG.29

25

# FIG.30

| No. | TEETH | TOOTH 1 | TOOTH 2 | TOOTH 3 | TOOTH 4 |
|---|---|---|---|---|---|
| 1 | STRAIGHT TEETH | 0° | 0° | 0° | 0° |
| 2 | RIGHT-HANDED HELICAL TEETH | 5° | 5° | 5° | 5° |
| 3 | DIFFERENT ARC TEETH | a=0.26mm b=0.26mm | a=0.47mm b=0.47mm | a=0.26mm b=0.26mm | a=0.47mm b=0.47mm |
| 4 | IDENTICAL ARC TEETH | a=0.26mm b=0.26mm | a=0.26mm b=0.26mm | a=0.26mm b=0.26mm | a=0.26mm b=0.26mm |

# FIG.31

| TOOTH A | TOOTH B | TOOTH C | TOOTH D |
|---|---|---|---|
| STRAIGHT TOOTH | RIGHT-HANDED HELICAL TOOTH | ARC TOOTH a=b (SMALL) | ARC TOOTH a=b (LARGE) |
| SHANK-PORTION SIDE ... BOTTOM-CUTTING-EDGE SIDE | SHANK-PORTION SIDE ... BOTTOM-CUTTING-EDGE SIDE | SHANK-PORTION SIDE ... BOTTOM-CUTTING-EDGE SIDE | SHANK-PORTION SIDE ... BOTTOM-CUTTING-EDGE SIDE |

# FIG.32

| WORK MATERIAL | CFRTP |
|---|---|
| TOOL SIZE | Φ6 |
| CUTTING VELOCITY | 200m/min |
| NUMBER OF REVOLUTIONS | 10,610min$^{-1}$ |
| FEED RATE | 1,698mm/min |
| FEED RATE PER TOOTH | 0.04mm/t |
| CUTTING METHOD | TRIMMING |
| WORK THICKNESS | 5mm |

# FIG.33

| No. | TEETH | MAXIMUM VALUE (N) | | AMPLITUDE (N) | |
|---|---|---|---|---|---|
| | | VALUE | RATIO | VALUE | RATIO |
| 1 | STRAIGHT TEETH | 265 | 100% | 258 | 100% |
| 2 | RIGHT-HANDED HELICAL TEETH | 274 | 103% | 270 | 105% |
| 3 | DIFFERENT ARC TEETH | 192 | 73% | 171 | 66% |
| 4 | IDENTICAL ARC TEETH | 200 | 75% | 271 | 66% |

# FIG.34

# FIG.35

| No. | TEETH | NUMBER OF TEETH | TOOTH 1 | TOOTH 2 | TOOTH 3 |
|---|---|---|---|---|---|
| 1 | VARIABLE LEAD | 3 | 5° RIGHT HELICAL TOOTH | 7° RIGHT HELICAL TOOTH | 9° RIGHT HELICAL TOOTH |
| 2 | COMPOSITE ARC TEETH | 3 | ARC TOOTH A | ARC TOOTH B | ARC TOOTH C |

# FIG.36

| ARC TOOTH A | ARC TOOTH B | ARC TOOTH C |
|---|---|---|
| a＝0.26mm b＝0.26mm | a＝0.96mm b＝0.01mm | a＝0.01mm b＝0.96mm |

# FIG.37

# FIG.38

# FIG.39

| No. | SHAPES OF TEETH |
|-----|-----------------|
| 1 | NORMAL TEETH |
| 2 | NICKED TEETH |
| 3 | ROUGHING TEETH |

# FIG.40

| WORK MATERIAL | CFRTP |
|---------------|-------|
| TOOL SIZE | Φ6 |
| CUTTING VELOCITY | 400m/min |
| NUMBER OF REVOLUTIONS | 15,915min$^{-1}$ |
| FEED RATE | 5,093mm/min |
| FEED RATE PER TOOTH | 0.080mm/t |
| CUTTING METHOD | TRIMMING |
| WORK THICKNESS | 5mm |

EP 4 252 944 A1

# FIG.41

| | No.1 NORMAL TOOTH | No.2 NICKED TOOTH | No.3 ROUGHING TOOTH |
|---|---|---|---|
| TOOL PHOTOGRAPHS | | | |
| RESISTANCE VALUE GRAPH | NORMAL TOOTH | NICKED TOOTH | ROUGHING TOOTH |
| RESISTANCE VALUE | 571N / 100% | 303N / 53% | 253N / 44% |
| AMPLITUDE | 560N / 100% | 295N / 53% | 249N / 44% |
| BURRS IN UPPER SIDE PORTION | 1.0mm | 1.0mm | 1.0mm |
| BURRS IN LOWER SIDE PORTION | 1.0mm | 1.0mm | 1.0mm |
| COMMENTS | FOR FINISHING ALTHOUGH RESISTANCE VALUE IS HIGH, BURRS ARE SMALL TO BE EASILY REMOVABLE. | FOR SEMI-FINISHING RESISTANCE VALUE IS LOW, BURRS ARE LARGE BUT SMALLER THAN IN ROUGHING TOOTH. | FOR ROUGHING ALTHOUGH RESISTANCE VALUE IS SMALL, BURRS ARE LARGE. |

30

<div style="text-align:center">**INTERNATIONAL SEARCH REPORT**</div>

| International application No. |
| --- |
| PCT/JP2020/044552 |

| A. CLASSIFICATION OF SUBJECT MATTER |
| --- |
| B23C 5/10(2006.01)i |
| FI: B23C5/10 Z |
| According to International Patent Classification (IPC) or to both national classification and IPC |

| B. FIELDS SEARCHED |
| --- |
| Minimum documentation searched (classification system followed by classification symbols) |
| B23C5/10 |

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

| Electronic data base consulted during the international search (name of data base and, where practicable, search terms used) |
| --- |

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | JP 2007-276010 A (TATSUNO METATE KAKOSHO KK) 25 October 2007 (2007-10-25) paragraphs [0017]-[0028] | 1-3, 5, 9<br>4, 6-8, 10 |
| Y | JP 2008-538729 A (YG-1 CO., LTD.) 06 November 2008 (2008-11-06) paragraphs [0023]-[0032], fig. 5A-10C | 4, 6-8, 10 |
| Y | US 2007/0297864 A1 (DE BOER TOOLS INC.) 27 December 2007 (2007-12-27) fig. 3 | 4, 6-8, 10 |
| A | JP 6-246525 A (NISSHIN KOKI KK) 06 September 1994 (1994-09-06) fig. 1 | 1 |
| A | US 2010/0209201 A1 (KENNAMETAL INC.) 19 August 2010 (2010-08-19) fig. 7-8 | 1 |
| A | US 7001113 B2 (FLYNN, Clifford M.) 21 February 2006 (2006-02-21) fig. 20-23 | 1 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 January 2021 (29.01.2021) | 22 February 2021 (22.02.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**
Information on patent family members

| International application no. |
| --- |
| PCT/JP2020/044552 |

| Patent Documents referred in the Report | Publication Date | Patent Family | Publication Date |
| --- | --- | --- | --- |
| JP 2007-276010 A | 25 Oct. 2007 | (Family: none) | |
| JP 2008-538729 A | 06 Nov. 2008 | US 2007/0248422 A1 paragraphs [0050]-[0058], fig. 5A-10C WO 2007/123326 A1 KR 10-2007-0111292 A CN 101326026 A | |
| US 2007/0297864 A1 | 27 Dec. 2007 | CA 2592215 A1 | |
| JP 6-246525 A | 06 Sep. 1994 | (Family: none) | |
| US 2010/0209201 A1 | 19 Aug. 2010 | WO 2010/096280 A2 CN 102317017 A | |
| US 7001113 B2 | 21 Feb. 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6389212 A
- JP 2013022657 A